# EUROPEAN PATENT APPLICATION

(11) **EP 1 024 091 A1**
(43) Date of publication of application: **02.08.2000**
(21) Application number: 00300365.4
(22) Date of filing: 19.01.2000
(51) Int. Cl.: B65D 47/12, B29C 45/16, B29C 33/30

(54) **Removable tip dispensing closure and method of manufacture**

(30) Priority: 26.01.1999 US 236600
(71) Applicant: OWENS-ILLINOIS CLOSURE INC., Toledo Ohio 43666 (US)
(72) Inventor: Kimble, Bradley J., Holland, Ohio 43528 (US)
(74) Representative: Votier, Sidney David

(57) **Abstract**

A removable tip dispensing closure and method of manufacture in which the closure body (16) and removable tip (18) are molded in sequential steps of a multi-material molding process. The closure body (16) and tip (18) are sequentially molded of differing materials that do not adhere to each other, so that the tip (18) may be readily removed from the closure (16) by a user for dispensing the contents of a package on which the closure is mounted. The closure body (16) is preferably of low density polyethylene (LDPE), while the tip (18) is preferably of propylene or styrene composition. The closure body (16) and tip (18) may be manufactured in differing colors by including suitable dyes in the resins prior to injection.

## Description

The present invention is directed to dispensing closures for containers and the like, and more particularly to a method of manufacturing a dispensing closure having a tip that may be readily removed and replaced by a user.

### Background and Summary of the Invention

In packages for dispensing hair care products and the like, the container closure is often provided with a tip that normally seals the container and may be removed by a user for dispensing the container contents. The tip may be formed as an integrally molded part of a nozzle that extends from the closure, with the nozzle being molded to have a thin or weakened section for removal of the tip, or being scored subsequent to molding to form a weakened line Molding of a thin frangible membrane in the closure nozzle requires multiple actions in the mold, and scoring of a weakened line subsequent to molding adds additional manufacturing expense. Alternatively, the closure and tip may be provided as separate components that must be assembled, again increasing manufacturing costs. A fourth alternative commonly employed is to require severing of the nozzle tip by the user. In many of these applications, the tip is not replaceable within the dispensing opening, so that the container is no longer sealed after first use.

It is a general object of the present invention to provide a removable tip dispensing closure and method of manufacture in which the tip is molded onto the closure during the manufacturing process, thus reducing the cost of manufacture, while at the same time not requiring severing of the closure nozzle by a user. Another object of the present invention is to provide a removable tip dispensing closure and method of manufacture in which the tip may be readily removed from the closure for dispensing contents of the package, and may be replaced on the closure for re-sealing the package between uses. Yet another object of the present invention is to provide a removable tip dispensing closure and method of manufacture in which the closure and removable tip may be manufactured in differing colors.

Briefly stated, the foregoing and other objectives are accomplished in accordance with the present invention by providing a removable tip dispensing closure and method of manufacture in which the closure body and removable tip are molded in sequential steps of a multi-material molding process. The closure body and tip are sequentially molded of differing materials that do not adhere to each other, so that the tip may be readily removed from the closure by a user for dispensing the contents of a package on which the closure is mounted. The closure body is preferably of low density polyethylene (LDPE), while the tip is preferably of propylene or styrene composition The closure body and tip may be manufactured in differing colors by including suitable dyes in the resins prior to injection.

In the preferred method in accordance with the present invention, the closure body is injection molded in a first mold that includes a first set of mold components. Following injection molding of the closure body, the rip is injection molded onto the dispensing closure body in a second mold that includes a number of the components of the first mold. Specifically, the first mold includes a mold base and a core that cooperate with a cavity insert to form a mold cavity for the closure body, including a dispensing opening in the closure. The mold base and core, together with the closure molded therein, then cooperate with a second cavity insert to form a mold cavity for the removable tip. When the tip is injection molded within this cavity, portions of the tip engage the dispensing opening of the closure for removably capturing the tip on the closure following removal of the closure and tip assembly from the mold components. The closure and tip are molded of incompatible materials so that the tip is not adhesively secured to the dispensing opening of the closure.

In the preferred embodiment of the invention, the dispensing opening has on internal surface, preferably frustoconical, that widens into the dispensing nozzle of the closure. The tip is molded onto the nozzle and opening so as to have an enlarged portion that extends within this widening area for resiliently releasably capturing the tip on the nozzle.

### Brief Description of the Drawings

The invention, together with additional objects, features and advantages thereof, will be best understood from the following description, the appended claims and the accompanying drawings in which:
FIG 1 is an elevational view of a dispensing package that includes a dispensing closure in accordance with a presently preferred embodiment of the invention;
FIG 2 is a diametrically sectioned elevational view of the dispensing closure assembly in the package of FIG. 1;
FIG 2A is a fragmentary exploded view of a portion of FIG. 2 with the tip removed;
FIG. 3 is fragmentary view on an enlarged scale of a mold cavity for forming the dispensing closure in accordance with the present invention; and
FIG. 4 is a fragmentary sectional view on an enlarged scale of a mold for forming the removable tip in accordance with the present invention.

### Detailed Description of Preferred Embodiments

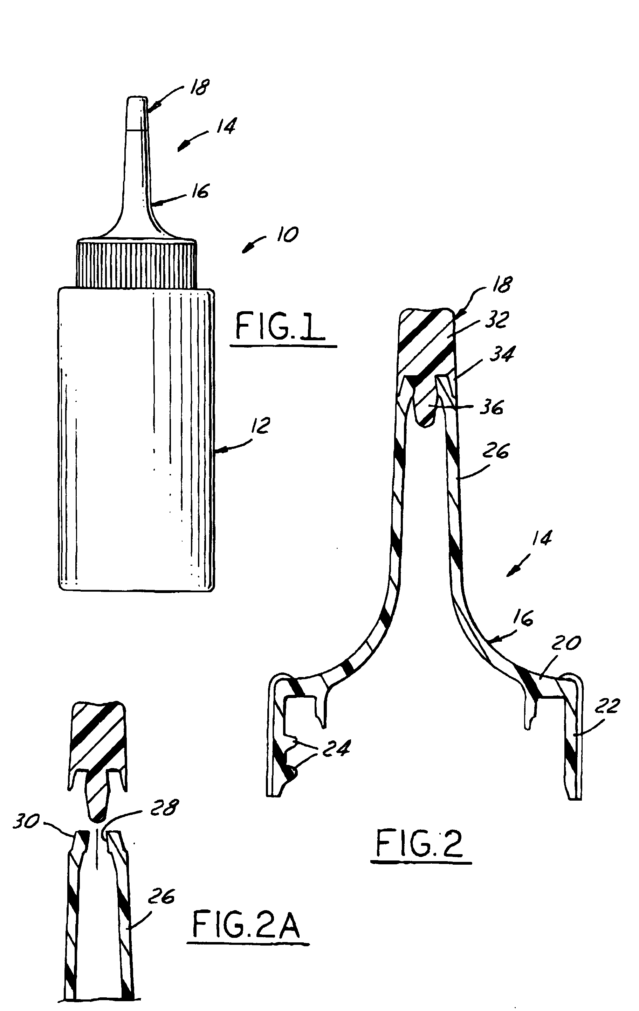

FIG. 1 illustrates a dispensing package 10 as including a container 12 and a removable tip dispensing closure 14. As best seen in FIG. 2, removable tip dispensing closure 14 includes a closure body 16 and a removable tip 18. Closure body 16 comprises a base having a base wall 20 and a peripheral skirt 22 with internal threads 24 for removably fastening closure 14 on the externally threaded finish of container 12. Threads 24 could be replaced by a snap head or the like. A nozzle 26 extends axially from base wall 20, terminating in a dispensing opening 28 over and within which tip 18 is removably mounted. Opening 28 is defined at least in part by a frustoconical internal surface that widens into nuzzle 26. A second frustoconical surface 30 externally surrounds opening 28 at the end of nozzle 26, widening along nozzle 26 and away from the axial end of the nozzle. Ribs may be provided on the external surface of closure skirt 26 for assisting assembly and removal of closure 16 to and from container 12.

Tip 18 comprises a body 32 from which a annular skirt 34 extends in surrounding surface engagement with surface 30 on the end of nozzle 26 A central plug 36 extends axially from body 32 of tip 18 through nozzle dispensing opening 28 into the hollow internal cavity of nozzle 26. Tip 32, including plug 36, is of resilient elastomeric composition such that body 32 of tip 18 may be grasped and withdrawn from the end of nozzle 26, resiliently compressing plug 36 during removal through nozzle dispensing opening 28.

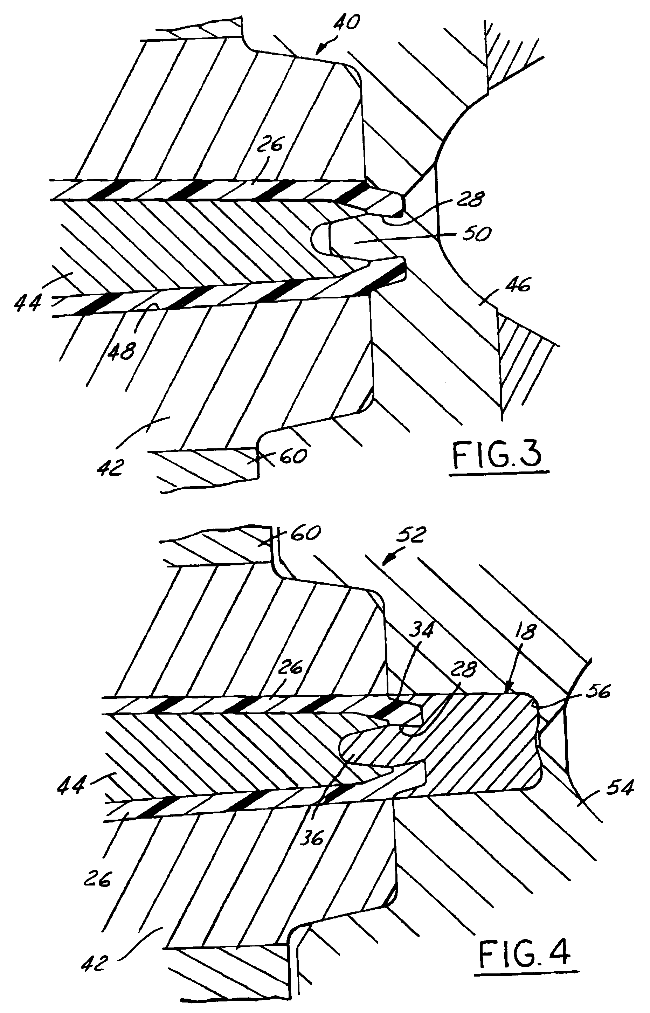

FIGS 3 and 4 illustrate a method of molding removable tip dispensing closure 14 in accordance with a presently preferred aspect of the invention. A first injection mold 40 (FIG. 3) is formed by a base mold 42 that carries a core tip 44. A cavity insert 46 mates with base mold 42 so as to form with core tip 44 a cavity 48 for injection molding of closure body 16. A shut-off tip 50 of cavity insert 46 cooperates with the tip of core 44 for closing mold cavity 48. Resin material is injected in the usual manner through cavity insert 46 into cavity 48 for injection molding closure body 16 (including nozzle 26 and dispensing opening 28 illustrated in FIG. 3).

A second mold 52 (FIG. 4) is then formed for injection molding tip 18. Mold 52 is preferably formed by mold base 42 and core 44 from mold 40 in FIG. 3, in combination with a new cavity insert 54. Cavity insert 54 cooperates with core 44, base 42 and the previously molded closure body 16 to form a mold cavity 56 for rip 18. The tip of core 44 is contoured to form plug 36, with this portion being blocked by insert tip at the stage of FIG. 3. Resin material is then injected into cavity 56 in the usual manner for injection molding tip 18 onto nozzle 26 - i.e., with plug 36 extending through dispensing opening 28 and with skirt 34 surrounding the external surface of the dispensing opening Mold sections 54, 42, 44 may then be opened in FIG. 4, and the assembly of closure body 16 and tip 18 ejected therefrom.

This sequential multi-material molding operation preferably is performed in a continuous process on a so-called wheel machine in which mold base 42 and core 44 are mounted on a rotating platen 60. As platen 60 is rotated, the mold base and core are brought to sequential stations for engagement by cavity inserts 46, 54 in turn, and then the molded assembly is ejected from the machine. Alternatively, but less preferably, the co-injection molding operation may be performed at separate sequential molds.

Closure body 16 is preferably made of low density polyethylene (LDPE) material. Tip 18 may be molded of propylene or styrene material. It is important that closure body 16 be of relatively rigid construction, while tip 18 is of resilient construction to permit removal and reassembly of the tip without fracture of the tip or the nozzle dispensing opening. The body 32 of tip 18 may be of any suitable geometry. The materials selected for the nozzle and tip must be sufficiently incompatible at the elevated temperatures of the molding operations as to prevent adhesion of the tip to the dispensing opening. Dyes may be included in the resins for making the closure and tip of the same or differing colors.

There have thus been provided a removable tip dispensing closure and method of manufacture that fully satisfy all of the objects and aims previously set forth Specifically, the closure and tip are formed as an assembly in a co-injection molding operation, eliminating any need for complex mold movements or post-manufacturing operations to form a weakened line for severing the tip, or post-manufacturing operations for assembling a separately manufactured tip and closure. Furthermore, the tip may be reassembled to the closure dispensing opening by the user for re-sealing the container, a feature that does not inhere in dispensing packages in which the tip is severed from the dispensing nozzle.

## Claims

1. A method of molding a dispensing closure that includes a closure body having a dispensing opening and a tip removably closing said opening, said method comprising the steps of:
(a) injection molding said closure body of a first material, including said opening in a first mold that includes a first set of mold components,
(b) injection molding said tip onto said closure body within said opening in a second mold that includes a number of said first components and of a second material different from said first material, and then
(c) removing the closure from said second mold.

2. The method set forth in claim 1 wherein said first mold comprises a mold base having a core and a first cavity insert having means for cooperating with said core for forming said opening, and wherein said second mold comprises the same said mold base and core and a second cavity insert having means for cooperating with said core and said closure body to form a cavity for molding of said tip.

3. The method set forth in claim 2 wherein said mold base, said core and said first cavity insert are such as to form said opening, such that said tip is molded having an enlarged diameter within said opening for retaining said tip within said opening following said step (c).

4. The method set forth in claim 3 wherein said closure body has an extended nozzle that terminates in said opening, said nozzle having a first conical surface within said opening that widens into said nozzle and a second conical surface exterior to said opening that widens away from said opening, said tip being molded in said step (b) against both of said conical surfaces.

5. The method set forth in claim 2 wherein said steps (a), (b) and (c) are accomplished by mounting said mold base and said core on a rotating platen to move between successive cavity insert and removal structures.

6. The method set forth in claim 1 wherein said closure body is molded of LDPE, and said tip is molded of propylene or styrene.

7. The method set forth in claim 1 wherein said closure body and tip are molded in differing colors.

8. A dispensing closure manufactured in accordance with the method of claim 1.

9. A dispensing closure that comprises
a closure body of a first material having base for receipt on a container and an extending nozzle terminating in a dispensing opening, and
a tip molded in situ on said nozzle within said opening, said tip being removabl from and replaceable in said nozzle opening, said tip being of a second material different from said first material.

10. The closure set forth in claim 9 wherein said nozzle opening has an internal surface that widens into said nozzle, said tip engaging said surface for releasable retention in said opening.

11. The closure set forth in claim 10 wherein said internal surface is frustoconical.

12. The closure set forth in claim 11 wherein said nozzle has an external surfac surrounding said opening that widens along said nozzle, said tip having a skirt in surface engagement with said external surface as molded.

13. The closure set forth in claim 9 wherein said closure body is of LDPE composition and said tip is of propylene or styrene composition.

14. The closure set forth in claim 9 wherein said closure body and tip are of differing colors.

15. The closure of claim 9 wherein said closure body includes a base wall and a peripheral skirt with internal means for receipt on a container.
